# EUROPEAN PATENT APPLICATION

(11) **EP 1 076 348 A2**
(43) Date of publication of application: **14.02.2001**
(21) Application number: 00610079.6
(22) Date of filing: 08.08.2000
(51) Int. Cl.: H01H 9/08

(54) **An electrical installation system comprising an installation device and an operating unit, and a method for establishing an installation comprising an installation device and an operating unit**

(30) Priority: 09.08.1999 DK 110799
(71) Applicant: LejKon Byg ApS, 2640 Hedehusene (DK)
(72) Inventor: Sörensen, Tonni Dann, 4000 Roskilde (DK)
(74) Representative: Carlsson, Eva

(57) **Abstract**

An electrical installation device comprising a box (1) with an associated mounting base part (4, 40, 400) in which installation wires may be mounted and an operating unit (7) may be inserted, the base mounting part (4, 40, 400) being adapted for insertion of functionally different operating units (7). The installation device and the operating unit form parts of an installation system.

## Description

The present invention relates to an electrical installation device comprising a box with an associated mounting base part in which installation wires may be mounted and an operating unit may be inserted, an operating unit, a system comprising an installation device and an operating unit, and a method for establishing an installation comprising an installation device and an operating unit.

With electrical installations, it is often necessary to be able to reconfigure them. This applies, e.g., in office buildings. It may be necessary to alter the allocation of a room, e.g., from an office to a copying or storage room or the like. It may also be necessary to combine or divide rooms. However, the need for reconfiguration is not limited to office buildings, but may, in principle, arise in all installations, including private ones.

In connection with such altered allocation a need for more outlets, joint turning-on of lights previously located in different rooms, or vice versa, may arise. Other types of switches may also be required, such as remote-control switches, dimmers, time-delay switches instead of direct manually operated switches, or vice versa.

Such reconfiguration is intricate and costly, as intervention in the installation is required if an altered function is to be obtained, partly to replace the operating units, partly to draw new or extra wires. This is the case, e.g., if a switch of a lighting point has to be changed to become part of a two-way switch for the lighting point. This particularly entails costs because the above interventions in the installation usually fall within regulations requiring a certified electrician to perform them.

GB-A-2 134 723 describes an installation device of the type mentioned in the introduction. This installation device aims at permitting lay people to replace defect switches or outlets in an all-insulated manner. This is obtained in that these switches or outlets are designed as modules that may be mounted in mounting bases in connection with a front panel, which, in the mounted condition, screens an installation box located behind it. These mounting bases are accessible in an all-insulated manner from the front of the front panel for the purpose of replacement of defect units.

In view of their use for both outlets and switches, the mounting bases are designed so that, as a starting point, they are uniform, the mounting bases having two blocking members that may irreversibly be broken off. The modular outlets and switches have housings of basically the same size and shape, but yet different as each has a design that corresponds to the mounting base when a respective one of the two blocking members has been removed therefrom. That is, as a starting point, the mounting bases do not permit insertion of neither outlets nor switches, this is only possible when one of the blocking members in the mounting base has been irreversibly removed.

The purpose of this is to allow the installation device to be configured once and for all at its installation. At the installation, wires corresponding to one particular desired configuration are mounted. To ensure subsequently that only this one configuration is allowed, the respective blocking members are broken off so that an outlet can only be replaced by a corresponding outlet, and a switch only by a corresponding switch.

So once a configuration has been chosen at the installation, the configuration cannot be altered without intervention in the installation and replacement of the mounting bases.

The object of the present invention is to provide a system, including an installation part and an operating unit, and a method according to the introductory paragraph, which, preferably without the use of a certified electrician, makes easy and simple reconfiguration of an electrical installation possible. In particular, the invention is to make it possible for this reconfiguration to be effected during the entire life of the installation.

In an installation device, an operating unit, a system and a method of the type mentioned in the introduction, this is obtained through the features stated in the characterizing parts of claims 1, 10, 13 and 15, respectively.

It should be mentioned in this connection that "functionally different" means operating units that differ functionally from each other so much that they require different wire connections.

In an advantageous embodiment the installation device is characterized in that the mounting base part may be mounted in the box, and that in its inserted condition the operating part closes the box in an all-insulated manner.

This remedies another disadvantage of GB-A-2 134 723, viz. that the mounting bases are integral with the front panel. This means that installation wires drawn to the box must have a substantial excess length. Viz., such excessive length as is required for it to be possible in practice to mount them in the mounting bases on the back of the front panel. This excess of wires then later has to find space in the box, which therefore has to be capacious.

This is due to the fact that the wires may be mounted directly in the mounting base while it is in the box so that no need to draw wires out of the box arises.

Preferably, the terminals on the mounting base are designed so that the stripped ends of the wires may be placed directly into the terminals and be secured there. This securing can be performed by means of screws, springs or the like.

It is advantageous if these screws or springs are designed so that all the work may be done from the open front of the box and with the least possible manipulation of the wires.

It is also advantageous if the mounting base part may be mounted in the box in an all-insulated manner. This makes it possible for lay people to replace the operating unit themselves when a certified electrician has made the original installation.

In an advantageous embodiment, the mounting base may be mounted at the bottom of the box, thus being able to form a sturdy foundation when the operating unit is inserted.

In another advantageous embodiment, the mounting base may be tiltably supported, and preferably it may then be mounted at a distance from the bottom of the box.

Particularly in case of boxes for flush mounting, this provides the advantage that the mounting base can tilt when the operating unit is inserted so that the operating unit is flush with the wall in which the box is mounted even if the box is mounted at a slight inclination in relation to the wall.

The invention also relates to a method for use in establishing electrical installations, and comprising the steps of mounting at least one box according to the invention, selecting a number of operating units according to the invention, mounting the wires necessary for the selected operating units in the mounting base of the box, and inserting a specific one of the selected operating units into the mounting base to obtain a specific operating function.

Prior mounting of all the wires necessary for the selected operating units facilitates subsequent reconfiguration of the installation. The only work necessary then is to remove the existing unit and insert another with the new desired function.

This does, however, entail extra costs for materials when the installation is established as it is necessary to draw and mount more wires than are immediately needed.

However, this is compensated for by the fact that the actual switch mounting becomes substantially easier so that time is saved at the mounting. Since wages are a highly important cost factor at the establishment of installations, the time saved is more important than the need for extra materials so that the total costs of the installation are reduced.

This is, however, recovered later in case of reconfiguration, because such reconfiguration is facilitated. This of course applies in particular where an all-insulated embodiment of the installation device and the operating unit is used so that the latter can be replaced by lay people.

The invention will now be explained in more detail below with reference to the schematic drawing, in which
Fig. 1 shows an exploded view of a system according to the invention, with an installation device comprising box and mounting base, and an operating unit,
Fig. 2 is a detailed outline of a connection in the mounting base according to Fig. 1,
Figs. 3a and 3b show other embodiments of the wire connection in the mounting base,
Fig. 4 is a diagram showing an example of the wiring for an installation device according to Fig. 1,
Figs. 5a to 5c are examples of different connections in operating units according to the invention, and
Figs. 6a to 6i show different embodiments of the screw terminal part of Fig. 1.

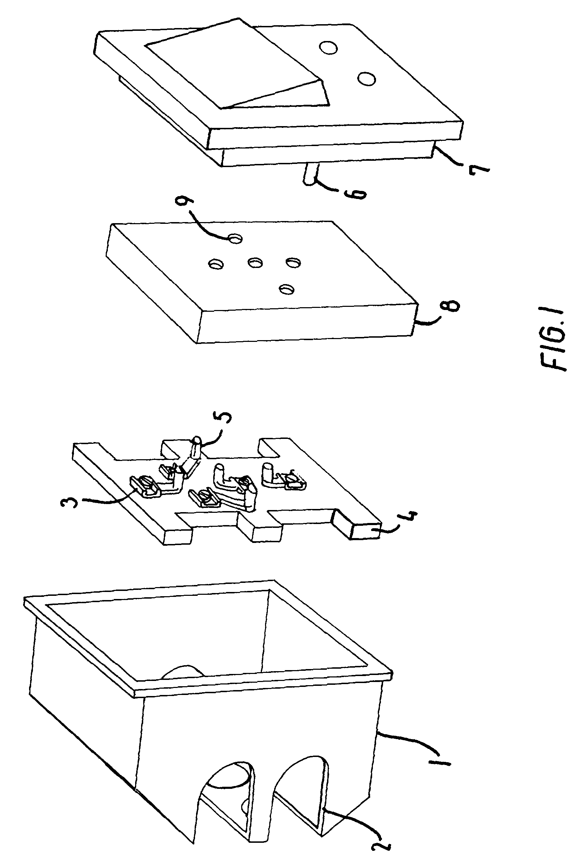

Fig. 1 shows an electrical installation box 1. The installation box 1 is for flush mounting in the wall, but the actual type of the box is not essential to the invention, and it might, e.g., also be of the surface mounting type.

In the box, a number of perforations 2 have been provided through which installation wires 13 can be drawn to and from the box 1.

In the box, the installation wires are mounted in screw terminals 3 on a mounting base 4 in the form of a panel. For the sake of clarity the number of screw terminals in the case shown is five, but in the event there may be fewer or particularly more than five. The screw terminals 3 are integrally formed with female sockets 5. These female sockets 5 are substantially cylindrical and are arranged so that their axes are at right angles to the mounting base so that corresponding connecting parts in the form of plug pins 6 may be inserted into the five female sockets 5. The plug pins 6 form the connections for an operating unit 7 comprising, in the case shown in Fig. 1, an outlet with associated switch.

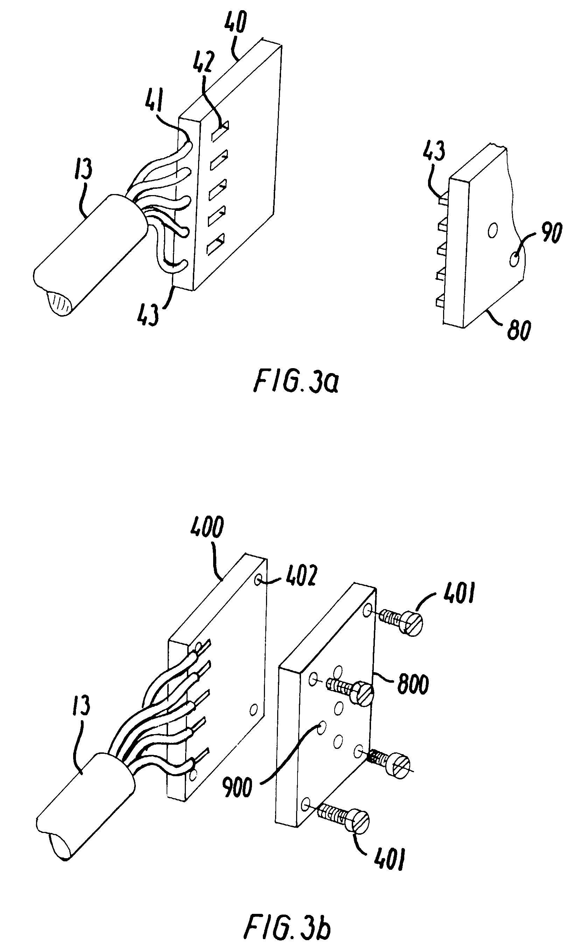

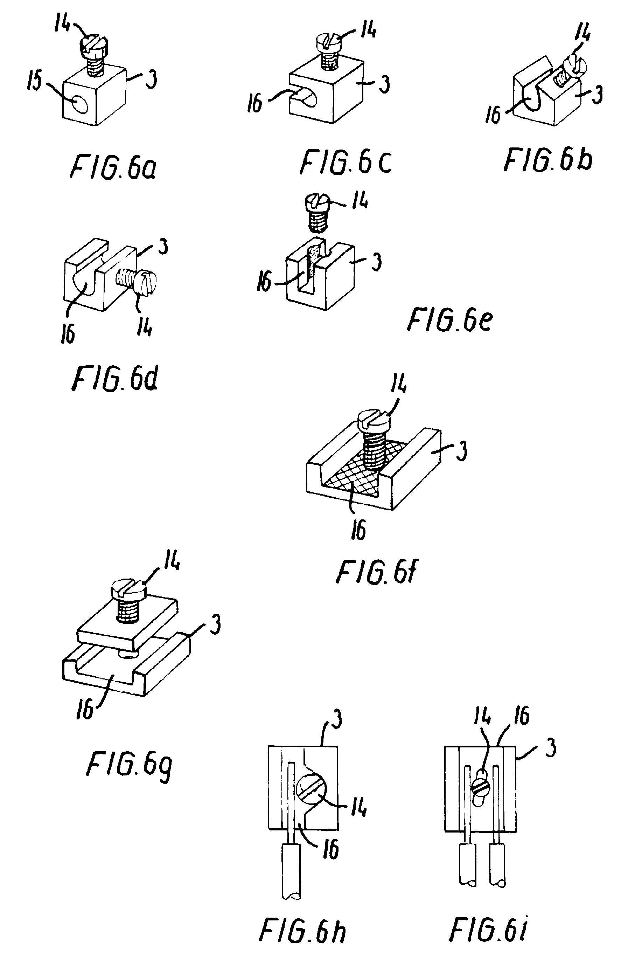

The screw terminals 3 may have different designs. Figs. 6a to 6i show different examples of how the actual screw terminals 3 may be designed. They may possibly be formed integrally with the female sockets 5 as shown in Fig. 2, or, as shown in Figs. 6a to 6i, they may be individual components otherwise electrically connected with the female sockets 5.

Fig. 6a shows a conventional screw terminal 3, in which a wire is inserted into a hole 15 along its own longitudinal axis and is secured with a transverse screw 14.

The embodiments according to Figs. 6b to 6i differ from the embodiment according to Fig. 6a in that the wire is not inserted axially into a hole, but may instead be arranged in a track 16 and be secured with a screw 14. That is, the wire is placed in the track in a direction transverse to the longitudinal axis of the wire.

This makes it possible to place the wires in the screw terminals 3 on the mounting base 4 when the latter is mounted in the box 1. This greatly facilitates the wire mounting compared with conventional solutions where the wire mounting is performed from the back of the operating unit.

This saves the excess length of wire conventionally necessary because the wires have to be pulled completely out of the box to the back of the operating unit to be mounted.

Furthermore, the mounting in the mounting base from the front is substantially easier than the mounting at the back of an operating unit so that time and thus wages are saved, which are normally a substantial cost in connection with establishment of installations.

In the embodiments according to Figs. 6a to 6d, the wire is retained by the shank of the screw 14, while the wire in the embodiments according to Figs. 6f to 6i is retained by the head of the screw 14. It is noted that the retention can be effected by squeezing the wire between a plate 17 and the bottom of the track 16 as shown in Fig. 6g, or by squeezing the wire directly between the head of the screw and the bottom of the track 16. The screw head in the latter case may advantageously be eccentric as in Fig. 6h or elliptical as in Fig. 6i.

Instead of screw terminals 3, various forms of spring terminals may be used, and also in this case types may advantageously be used in which the wires are arranged in a direction transverse to their longitudinal axis.

The mounting base 4 may be located completely at the bottom of the box 1 or, as in Fig. 1, raised above it.

If the mounting base is raised above the bottom, it may advantageously be supported so as to be tiltable.

Figs. 3a and 3b indicate various other designs of the mounting base 4 which are to facilitate the arrangement and connection of the wires.

In Fig. 3a the wires have been drawn from the side into a mounting base 40 through openings 41 in the side 43. In these holes, electrical contact to pins 43 of a cover plate 80 is created when these pins are inserted into holes 42 in the mounting base 40. These pins also have the function of retaining the wires 13 in the mounting base 40. From the pins 43, there is connection through the cover plate 80 to insertion openings 90 in which there are cylindrical female sockets. When the mounting base 40 and the cover plate 80 are assembled, they constitute an all-insulated unit which may be placed in the box 1, and into which an operating unit 7 may be inserted.

In Fig. 3b, the wires 13 are drawn to a mounting base 400 against which they may be squeezed for retention by means of a cover plate 800 which is screwed onto the mounting base by means of the screw 401 and corresponding threaded bores 402. The cover plate 800 contains connecting pieces that create contact between the wires 13 and cylindrical female sockets in the openings 900.

In this connection innumerable different methods of fastening the wires 13 in the mounting base can be imagined as well as innumerable methods of designing the female sockets. In particular they are not restricted to female sockets. A worker skilled in the art will understand that the female sockets, in as much as coaxial contacts are used at all, may also be present as connecting parts on the operating unit instead of the plug pins described previously.

To be able to function, the outlet according to Fig. 1 must be connected to two power supply wires, viz. a phase R and zero 0. It is thus provided with two plug pins 6 of which only one is visible. The electrical connection of the plug pins 6 with the outlet is made via a switch in the phase wire as shown in Fig. 5c.

It should be pointed out in this connection that the word operating unit 7 should be understood in a broad sense and particularly comprises pure outlets, that is, without any other operating option than the placing of a plug.

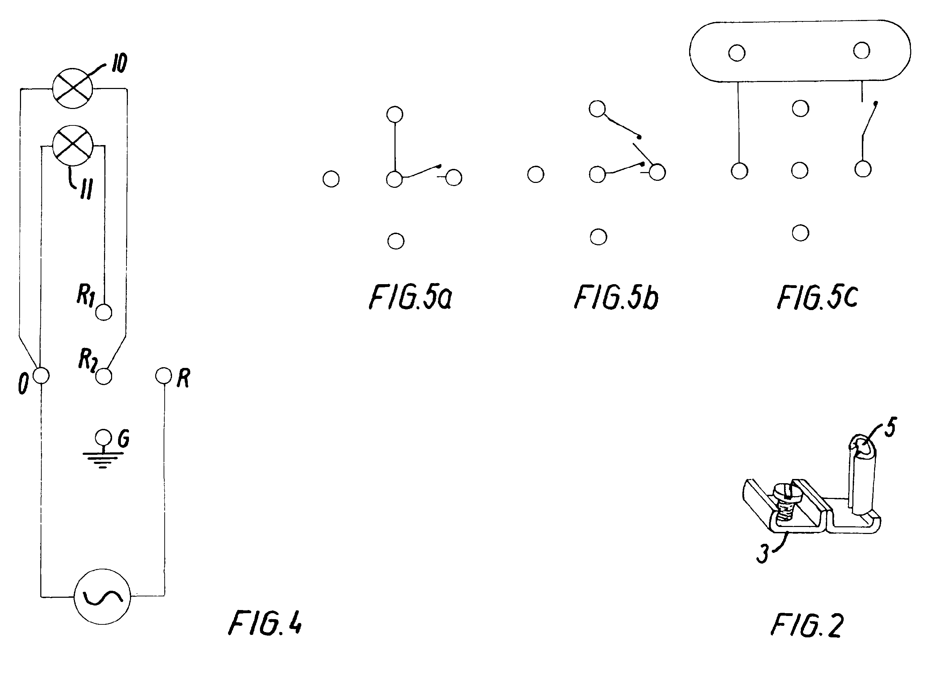

In a given installation, the two power supply wires will thus, by means of the screw terminals, be connected with the two female sockets 5 on the mounting base 4 corresponding to the plug pins 6. This is illustrated in Fig. 4 with an alternating current source 12 between the terminals 0 and R. Fig. 4 also illustrates that an earth wire is connected to the terminal G, and that a first and a second lamp 10, 11 are connected between the terminals R₁ and 0 and R₂ and 0, respectively.

Thus, in accordance with the method according to the invention, it has been chosen before the installation that operating units requiring phase and zero are to be used with the installation. As examples can be mentioned single or multiple outlets which may be with or without a switch, and again various types of switches can be imagined, such as the manual one shown, IR or UL remote-controlled switches, timer-controlled switches, etc.

As it has further been chosen to connect one of the terminals, viz., the terminal G, to earth, it has consequently been chosen that it should be possible to replace the operating units mentioned above with another unit having an earth pin. As examples can be mentioned single or multiple outlets which may be with or without a switch, and again various types of switches can be imagined, such as manual switches, IR or UL remote-controlled switches, timer-controlled switches, etc.

Finally it has been chosen to connect power supply wires for two different lamps 10, 11 with respective terminals. It has thus been chosen at the installation that it should be possible to use operating units that control these lamps. For the sake of good order it should be mentioned that lamps are referred to for the sake of ease, but that other consumption devices may be involved as well, such as fans, heaters, etc., and it may also be a lighting point where possibly no lamp is mounted.

With this wire connection it thus also becomes possible to mount an operating unit with switches for controlling the two lamps separately or together. In that case an operating unit for separate control of the two lighting points 10, 11 would comprise a first switch between the plug pins corresponding to R and R₂ and a second switch between the plug pins corresponding to R and R₁ as illustrated in Fig. 5b. An operating unit for joint operation of the two lamps would comprise a short-circuit between the plug pins corresponding to R₁ and R₂ and a switch between R and R₁ or R₂, as illustrated in Fig. 5a. Also in this case these switches may be of different types, such as manual, IR or UL remote-controlled, timer controlled, etc. The use of dimmers is also conceivable in the operating unit as a supplement to or instead of the switch of a lamp.

If there had only been a lighting point, it would only have been possible to connect a wire from the lamp to either R₁ or R₂, and the respective other one would then be unutilized. Thus, another choice would have been made concerning the operating units for which it should be possible to reconfigure the installation.

This de-selection of connections thus not utilized will be of substantially more importance at more complex embodiments having more than five poles. Here, by virtue of the larger number of poles, there would be greater freedom to choose desired operating units, and thus to choose which of the terminals would be connected with wires, and which would be left unutilized.

When the certified electrician has connected the desired installation wires to the screw terminals 3 on the mounting base 4 at the bottom of the box 1, a cover plate 8 is placed over the mounting base to obtain complete insulation, that is, protection against persons unwittingly touching live parts, viz., the screw terminals 3 and the cylindrical female sockets 5.

The cover plate 8 is provided with holes 9, whose location corresponds to the location of the cylindrical female sockets 5. Thus the plug pins 6 may be inserted through the holes 9 and come into contact with the female sockets 5.

The cylindrical female sockets 5 are preferably located with their axes perpendicular to the bottom of the box 1 or, in other words, perpendicular to the surface on or in which the box 1 is to be installed. This facilitates insertion of the operating unit 7 into the mounting base 4 in the box 1.

It is obvious that the interchangeability of the operating units 7 on which the reconfigurable system is based is not affected by the cover plate 8, which only serves to establish complete insulation.

Thus, in principle, it will be possible, to the extent allowed by regulations, to omit the cover plate and instead let the operating unit 7 close the box 1 in an all-insulating manner.

The mounting base 4, the cover plate 8 and the operating unit 7 are preferably fastened in a manner known *per se* in the box 1 by means of snap locking mechanisms, not shown, but the invention is not restricted to this, and other fastening devices, such as screws, may also be used.

Even though the embodiment described only describes a solution with five poles, it is obvious that other numbers may be used. Particularly, as mentioned, a larger number may be used in practice.

This is advantageous as, for safety reasons, it is desirable always to have the wires necessary for a given function located in the same place as a matter of standard. The operating units 7 may then have standard pin configurations corresponding to their respective functions, and there will thus be no risk that an operating unit 7 is inserted into female sockets 5 that are connected with wires relating to other functions. There is, of course, a risk that the wires are incorrectly connected, but this risk is also present in other installations and will be reduced here, as the wire connection used is the same from one time to the next.

Particularly as concerns errors, large installations have the advantage that the entire installation may be mounted apart from the operating units 7.

The installation may then be checked for errors, and if the installation has no errors, the operating units 7 can be inserted. The advantage is that these three actions may be performed mutually independently, and that insertion of the operating units 7 may be done by anybody, and not only by a certified person. This person might, e.g., be the end user himself. The error checking may also be made at a relatively early time as compared with conventional installations.

It is obvious that in the preferred all-insulated embodiment, apart from permitting reconfiguration of the electrical installation, the system also permits lay people to carry out repairs, as they may just replace a defective unit by another functioning one, furthermore a non-defective unit may be replaced by a unit of another appearance, e.g., another colour.

Furthermore, lay people may temporarily remove an operating unit 7, e.g., in connection with painting, whereupon the very same unit 7 is re-inserted.

## Claims

1. An electrical installation device comprising a box (1) with an associated mounting base part (4, 40, 400) in which installation wires may be mounted and an operating unit (7) selected among different operating units may be inserted, **characterized** in that the mounting base part (4, 40, 400) is adapted for insertion of functionally different operating units (7), and that the installation wires necessary for the different operating units (7) may be mounted in the mounting base part (4, 40, 400).

2. An electrical installation device according to claim 1, **characterized** in that the mounting base part (4, 40, 400) may be mounted in the box (1), and that in its inserted condition the operating part (7) closes the box (1) in an all-insulated manner.

3. An electrical installation device according to claim 1, **characterized** in that the mounting base part (4, 40, 400) may be mounted in the box (1) in an all-insulated manner.

4. An electrical installation device according to claim 3, **characterized** in that the mounting base part (40, 400) is in itself designed to be all-insulated.

5. An electrical installation device according to claim 3, **characterized** in that the mounting base part (4, 40, 400) may be mounted under a cover plate (8) in an all-insulated manner.

6. An electrical installation device according to any one of claims 2 to 5, **characterized** in that the mounting base part (4, 40, 400) may be mounted at the bottom of the box (1).

7. An electrical installation device according to any one of claims 2 to 5, **characterized** in that the mounting base part (4, 40, 400) may be mounted at a distance from the bottom of the box.

8. An electrical installation device according to any one of claims 6 or 7, **characterized** in that the mounting base part may be mounted so as to be tiltably supported.

9. An electrical installation device according to any one of the preceding claims, **characterized** in that the mounting base part (4, 40, 400) is adapted for insertion of the operating units (7) in a direction substantially perpendicular to a surface on which the box (1) is installed.

10. An operating unit for use in an installation device according to any one of claims 1 to 9, **characterized** in that it is adapted only to be insertable in the mounting base part (4, 40, 400) in a manner corresponding to the mounting of preselected installation wires in the mounting base part (4, 40, 400).

11. An operating unit according to claim 10, **characterized** in that it has the configuration of the connection parts which is characteristic for the function of the unit.

12. An electrical installation system comprising an installation device according to any one of claims 1 to 9 and an operating unit (7) according to any one of claims 10 to 11.

13. An electrical installation system according to claim 12, **characterized** in that the mounting base part (4) comprises cylindrical female sockets (5), and that the operating unit (7) comprises plug pins (6) corresponding thereto in design.

14. A method for use in establishing electrical installations, and comprising the steps of:
mounting at least one box (1) according to claim 1,
selecting a number of operating units (7) according to claim 10,
mounting the installation wires necessary for the selected operating units (7) in the mounting base part (4, 40, 400) of the box, and
inserting a specific one of the selected operating units (7) into the mounting base part (4, 40, 400) to obtain a specific operating function.

15. A method of changing an electrical installation established according to claim 14, **characterized** in that the operating unit (7) inserted into the mounting base part (4, 40, 400) is replaced by another operating unit chosen among the selected operating units to obtain another operating function.

16. A method of repairing an electrical installation according to claim 13 or 14, **characterized** in that the operating unit (7) inserted in the mounting base part (4, 40, 400) is replaced by a corresponding operating unit.
